# EUROPEAN PATENT APPLICATION

(11) **EP 4 539 472 A1**
(43) Date of publication of application: **16.04.2025**
(21) Application number: 24205625.7
(22) Date of filing: 09.10.2024
(51) Int. Cl.: H04N 21/258, H04N 21/43, H04N 21/442, H04N 21/4627, H04N 21/485

(54) **DEVICE CONTROL COORDINATOR FOR COLLABORATIVE MEDIA CONSUMPTION SESSIONS**

(30) Priority: 10.10.2023 US 202318483588
(71) Applicant: Spotify AB, 111 53 Stockholm (SE)
(72) Inventor: BARLEY, Joshua, 111 53 Stockholm (SE); TINGSTRÖM, Anton Hans Isak, 111 53 Stockholm (SE); BROWN, Adam Peter Stuart, 111 53 Stockholm (SE)
(74) Representative: Ström & Gulliksson AB

(57) **Abstract**

Device control permissions are managed during collaborative media consumption sessions. A permissions coordinator authenticates a group of users who wish to participate in a collaborative media session. A specific set of control permissions for an initial user group. The permissions can be determined based on the number of users within that group. Permissions coordinator communicates these control permissions back to the user group.

## Description

### TECHNICAL FIELD

Example embodiments described herein relate generally to device control, and more particularly to coordinating device control permissions in collaborative media consumption sessions.

### BACKGROUND

Technological progress has profoundly revolutionized how people engage with media and entertainment content. The conventional approach to media consumption has evolved into interactive and collaborative experiences, where users now seek ways to collectively enjoy content, irrespective of their physical locations. To meet this demand, collaborative media consumption sessions have emerged, enabling multiple users to participate in media sessions concurrently through their media playback devices. A collaborative media consumption session (also referred to as a social listening session or group session) generally refers to a video or audio playback experience in which multiple media playback devices, such as smartphones, tablets, smart televisions (TVs) or other devices, listen to the same media content.

One feature some collaborative media consumptions sessions provide is one that allows participants to control a host's audio output device, essentially serving as a remote control for media playback. However, hosts may have reservations about granting too many individuals control over specific aspects of media playback. Additionally, the desire to manage distinct scenarios drives the need for varied controls. For instance, permissions for an intimate setting, like family or friends, should ideally differ from those in scenarios involving larger groups of friends or guests. Addressing this, one technical challenge involves devising an architecture that empowers authorized users to establish trust parameters for these diverse scenarios. Another technical issue revolves around enabling permissions that align with the group's size. Furthermore, setting such permissions on a group-by-group basis poses an additional challenge.

Moreover, the task of differentiating between participant groups to offer varying permission levels poses a technical hurdle. Alongside, dynamically adjusting permissions as group sizes fluctuate presents another challenge in this domain.

### SUMMARY

Aspects of the embodiments described herein offer a solution to the challenges associated with collaborative media consumption session experiences and empowers users to enjoy content in ways that align with their preferences and social interactions. The present disclosure provides methods, systems and non-transitory computer-readable products for device control permission coordinating in a collaborative media consumption session.

In an example embodiment, a system for device control permission coordinating in a collaborative media consumption session comprises: a permissions coordinator configured to: authenticate a first group of users to join a collaborative media consumption session, determine a first set of control permissions for the first user group, wherein the first set of control permissions is based on a first number of users in the first user group, and communicate the first set of control permissions to the first user group.

In some embodiments, the system further comprises: a permissions data store in communication with the permissions coordinator and configured to store a correlation between one or more control permissions and one or more user groups associated with the collaborative media consumption session. The permissions coordinator can further be configured to: cause the collaborative media consumption session to be established based on a collaborative media consumption session establishment request from a host user, the host user being a member of the first group, and store in the permissions data store a first group control permission correlation between a first collaborative media consumption session identifier associated with the collaborative media consumption session, the first user group, and the first set of control permissions.

In some embodiments, the system further comprises: a permissions data store in communication with the permissions coordinator and configured to store a correlation between one or more control permissions and one or more user groups associated with the collaborative media consumption session. The permissions coordinator can further be configured to retrieve from the control permissions data store the first set of control permissions for the first user group based on a first collaborative media consumption session identifier associated with the collaborative media consumption session.

In some embodiments, the permissions coordinator is further configured to disable a control permission of a user in the first user group.

In some embodiments, the permissions coordinator is further configured to: determine a collaborative media consumption session identifier associated with the collaborative media consumption session, determine the first number of users in the first user group based on the collaborative media consumption session identifier, and set the first set of control permissions based on the first number of users.

The permissions coordinator, in some embodiments, is further configured to: authenticate a second group of users to join the collaborative media consumption session, determine a second set of control permissions for the second user group, wherein the second set of control permissions is based on a second number of users in the second user group, and communicate the second set of control permissions to the second user group.

In some embodiments, the permissions coordinator is further configured to disable a control permission of a user in the second user group.

The permissions coordinator, in some embodiments, is further configured to: detect, during the collaborative media consumption session, a change in a combination of the first number of users in the first user group and the second number of users in the second user group, update at least one control permission associated with (i) the first user group, (ii) the second user group, or (iii) both the first user group and the second user group, thereby creating at least one updated control permission, and send at least one updated control permission to (i) the first user group, (ii) the second user group, or (iii) both the first user group and the second user group, correspondingly.

In another embodiment, a method for device control permission coordinating in a collaborative media consumption session, comprising: authenticating a first group of users to join a collaborative media consumption session; determining a first set of control permissions for the first user group, wherein the first set of control permissions is based on a first number of users in the first user group; and communicating the first set of control permissions to the first user group.

In some embodiments, the method further comprises: storing a correlation between one or more control permissions and one or more user groups associated with the collaborative media consumption session; causing the collaborative media consumption session to be established based on a collaborative media consumption session establishment request from a host user, the host user being a member of the first group; and storing a first group control permission correlation between a first collaborative media consumption session identifier associated with the collaborative media consumption session, the first user group, and the first set of control permissions.

In some embodiments, the method further comprises: storing a correlation between one or more control permissions and one or more user groups associated with the collaborative media consumption session; and retrieving from a data store the first set of control permissions for the first user group based on a first collaborative media consumption session identifier associated with the collaborative media consumption session.

The method, in some embodiments, further comprises disabling a control permission of a user in the first user group.

In some embodiments, the method further comprises determining a collaborative media consumption session identifier associated with the collaborative media consumption session; determining the first number of users in the first user group based on the collaborative media consumption session identifier; and setting the first set of control permissions based on the first number of users.

In some embodiments, the method further comprises: authenticating a second group of users to join the collaborative media consumption session; determining a second set of control permissions for the second user group, wherein the second set of control permissions is based on a second number of users in the second user group; and communicating the second set of control permissions to the second user group.

The method, in some embodiments, further comprises disabling a control permission of a user in the second user group.

The method, in some embodiments, further comprises: detecting, during the collaborative media consumption session, a change in a combination of the first number of users in the first user group and the second number of users in the second user group, updating at least one control permission associated with (i) the first user group, (ii) the second user group, or (iii) both the first user group and the second user group, thereby creating at least one updated control permission, and sending at least one updated control permission to (i) the first user group, (ii) the second user group, or (iii) both the first user group and the second user group, correspondingly.

In some embodiments, the first set of control permissions includes one or more control permissions corresponding to a hardware function associated with an audio output device configured to playback media content associated with the collaborative media consumption session. In some embodiments, the one or more control permissions can include any one or a combination of: a volume control providing a permission to adjust the volume level of the audio output device, a mute-unmute control providing a permission to mute or unmute an audio output of the audio output device, an equalizer setting control providing a permission to modify one or more audio equalizer settings of the audio output device including any one or a combination of bass and treble, an audio source selection control providing a permission to choose a source of audio input for the audio output device, an audio effects control providing a permission to apply an audio effect to the media content, an audio mode control providing a permission to switch between two or more different audio modes of the audio output device, and a balance-fade control providing a permission to adjust a balance between left and right speakers of the audio output device, or a fade between front and rear speakers of the playback device in a multi-speaker configuration.

In some embodiments, the collaborative media consumption session is associated with a collaborative media consumption session identifier, and the collaborative media consumption session identifier includes a playlist identifier corresponding to a playlist of media content items.

In some embodiments, the collaborative media consumption session is associated with a collaborative media consumption session identifier, and the collaborative media consumption session identifier is represented by at least one or more of a scannable visual code, an audio signal with embedded acoustic fingerprint or Uniform Resource Locator (URL) or Uniform Resource Identifier (URI), a Bluetooth signal or an ultra wide band signal.

In some embodiments, the first number of users in the first user group is within a specified range.

Another embodiment involves a non-transitory computer-readable medium having stored thereon one or more sequences of instructions for causing one or more processors to perform the methods described herein.

### BRIEF DESCRIPTION OF THE DRAWINGS

The features and advantages of the example embodiments of the invention presented herein will become more apparent from the detailed description set forth below when taken in conjunction with the following drawings.
FIG. 1 is a system-flow diagram of an architecture for coordinating device control permissions in collaborative media consumption sessions, according to an example embodiment.
FIG. 2 illustrates an example process for determining sets of control permissions for different user groups, according to an example embodiment.
FIG. 3 illustrates an example process for authenticating and setting control permissions for different user groups, according to an example embodiment.
FIG. 4 is a screenshot generated by a graphical user interface of a media playback device for coordinating control permissions in a collaborative media consumption session, according to an example embodiment.
FIG. 5 is a screenshot generated by a graphical user interface of a media playback device for coordinating control permissions of a particular user group in a collaborative media consumption session, according to an example embodiment.
FIG. 6 is a screenshot generated by a graphical user interface of a media playback device for coordinating control permissions of a particular user group in a collaborative media consumption session, according to an example embodiment.
FIG. 7 is a screenshot generated by a graphical user interface of a media playback device for coordinating control permissions of a particular user group in a collaborative media consumption session, according to an example embodiment.
FIG. 8 is a screenshot generated by a graphical user interface of a media playback device for coordinating which permissioned controls are available to a particular user group after the size of the user group exceeds a predetermined number, according to an example embodiment.
FIG. 9 is a screenshot generated by a graphical user interface of a media playback device for selecting permissioned control parameters in a collaborative media consumption session, according to an example embodiment.
FIG. 10 is a representative view of a system in which some embodiments of the invention may be implemented.

### DETAILED DESCRIPTION

The example embodiments presented herein are directed to systems, methods, and non-transitory computer-readable medium products for coordinating device control permissions in collaborative media consumption sessions, which are now described herein in terms of an example architecture for controlling audio output devices. This description is not intended to limit the application of the example embodiments presented herein. In fact, after reading the following description, it will be apparent to one skilled in the relevant art(s) how to implement the following example embodiments in alternative embodiments, such as an architecture for controlling video output devices. That is, the embodiments described herein are not limited to controlling hardware functions associated with only an audio output device but are also applicable to controlling hardware functions associated with a video output device.

Unless otherwise defined, all terms (including technical and scientific terms) used herein have the same meaning as commonly understood by one of ordinary skill in the art of this disclosure. It will be further understood that terms, such as those defined in commonly used dictionaries, should be interpreted as having a meaning that is consistent with their meaning in the context of the specification and should not be interpreted in an idealized or overly formal sense unless expressly so defined herein. Well known functions or constructions may not be described in detail for brevity or clarity. In addition, the terminology used herein is for the purpose of describing particular examples only and is not intended to be limiting. As used herein, the singular forms "a", "an" and "the" are intended to include the plural forms as well, unless the context clearly indicates otherwise.

An "edge device," as used herein, generally refers to a type of device that is located at the periphery of a network, closer to where data is generated, collected, or used. Edge devices, in some implementations, can be small, low-power devices that are designed to perform specific functions, such as collecting and processing data, or controlling other devices. Examples of edge devices include smart sensors, routers, gateways, smart televisions, and mobile devices. These devices are connected to the internet or a local network and can communicate with other devices or cloud-based services. In some implementations, the data associated with the edge device(s) is processed at the edge of a network, rather than in a central location. By processing data closer to where it is generated, edge devices can reduce latency and improve performance, as well as reduce the amount of data that needs to be transmitted to the cloud or other central location.

A "link" or "media content item identifier," as used herein, generally is a unique identifier that represents a specific piece of content on a media distribution platform. In some embodiments, it is a string of characters that includes a code that identifies content, such as a media content item or other identifiable type of content. A link such as a URI (uniform resource identifier), for example, can be used to share and link to content on a media distribution platform, and can be used in various ways such as embedding a media content item in a website, adding a media content item to a playlist, or sharing a link. For example, a Spotify URI for the song "Song Title" by Artist can be coded as "spotify:track:7azZff4dY1lWllzX7mPBI3". This link uniquely identifies this song on the Spotify platform and can be used to access the song through the Spotify API or to share the song with others. A link is not limited to formats like URI; this link can be presented in other forms, such as scannable codes (e.g., QR codes or other machine-readable codes) or machine-readable audio cues (e.g., fingerprinted audio cues). A link can be shared independently in the forms described above or embedded within other types of communication messages (e.g., JSON and so on).

A "media content item" or "entity" as used herein, generally refers to an individual track, a video, an artist, an album, a playlist, a podcast, a radio station, a live recording, a DJ mix, a stream, and/or any other set of playable entity (also sometimes referred to interchangeably as "segments") that is playable by a media playback device. In some embodiments, a media content item identifier is used to locate the media content item. A media content item is sometimes also referred to as a "playable entity."

"Middleware," as used herein, generally refers to software that sits between two or more applications or systems, providing a communication layer that allows them to exchange data and interact with each other. Middleware acts as a bridge between applications, enabling them to share data and services without requiring them to know the details of each other's underlying architecture or programming languages. Middleware also refers to components used in distributed computing environments, where multiple applications or systems are spread across different machines or locations. Middleware can be used to provide a variety of services, such as message queuing, remote procedure calls, data caching, and transaction processing.

Illustrative examples of the disclosure are described below. In the interest of clarity, not all features of an actual implementation are described in this specification. It will of course be appreciated that in the development of any such actual example, numerous implementation-specific decisions must be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

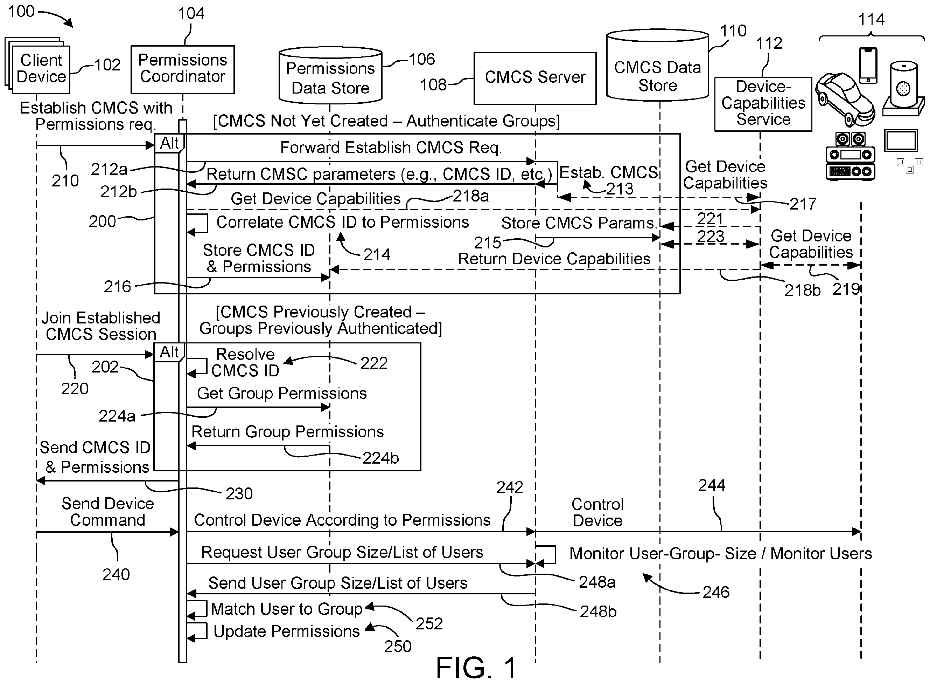

FIG. 1 is a system-flow diagram of an architecture 100 for coordinating device control permissions in collaborative media consumption sessions, in accordance with an example embodiment. Architecture 100 involves a plurality of client devices 102 (e.g., media playback devices), a permissions coordinator 104, a permissions data store 106, a collaborative media consumption session (CMCS) server 108, a collaborative media consumption session (CMCS) data store 110, a device-capabilities service 112, and the audio output device 114. The audio output device 114, in some implementations, can be a component of one or more of the client devices 102 (e.g., media playback devices). An audio output device 114, as used herein, generally refers to a device capable of audio output, which can be connected through a network or a network-connected device, and can be controlled using a smartphone, tablet, or similar devices.

In some embodiments, the audio output device 114 also includes additional hardware components that can be controlled, such as a display device that can be used to display a graphical user interface. In some implementations, the display device is a physical hardware component that can visually render content, such as a monitor, screen, or any surface capable of showing visual information. The graphical user interface, in some implementations, is a software-based interface that allows users to interact with the audio output device using graphical elements like icons, buttons, windows, and menus. In an example implementation, the graphical user interface is presented on the display device.

In some embodiments, the audio output device can include other non-audio features such as lights that can display various visual effects (e.g., laser lights, strobe lighting, lights that match the beat of music being played by the audio output device, and the like). These non-audio features are also referred to herein as special device features that involve corresponding controls, referred to as special device controls.

A group of users, as used herein, generally refers to a specific subset of users who are participating in a collaborative media consumption session. A group of users is sometimes referred to as a "user group" or simply as a "group." In an example implementation, a group of users is granted certain device control permissions within the context of this collaborative media consumption session. Aspects of the embodiments described herein perform coordinating these device control permissions for different groups of users in a collaborative media consumption session. In an example embodiment, a "first group" is one such group of users. This first group of users is enabled to execute specific device controls on an audio output device. In an example embodiment, a "second group" is another group of users. This second group of users is enabled to execute other specific device controls on the audio output device. In an example use case, the first group of users has more device controls than the second group of users. In addition, none of the users in the first group overlaps with the users in the second group.

Generally, the role of the permissions coordinator 104 is to authenticate users who belong to different groups (e.g., the first group of users and the second group of users) and to determine a set of control permissions for each of the groups of users, correspondingly. These permissions enable the users in a group to control aspects of an audio output device 114.

In an example embodiment, the set of control permissions includes permissions corresponding to hardware functions associated with the audio output device 114, where the audio output device 114 is configured to playback media content related to the collaborative media consumption session. Non-limiting examples of audio output device control permissions include: volume control (for adjusting the volume level), mute-unmute control (for muting or unmuting audio output), equalizer setting control (for modifying audio characteristics such as bass and treble), audio source selection control (for choosing an audio input source), audio effects control (for applying effects to media content), audio mode control (for switching between different audio modes), and balance-fade control (for adjusting speaker balance or fading in a multi-speaker setup). In some instances, this set of permissions does not include certain device controls, such as play, pause, rewind, fast forward, speed up, or slow down, referred to as playback controls.

In other embodiments, in addition to device control permissions the set of permissions also includes playback controls, such as play, pause, rewind, fast forward, speed up, or slow down.

In yet other instances the audio output device control permissions include controls that are unrelated to audio, such as visual effects controls (e.g., causing a message to be displayed on a display output, controlling lighting, etc.).

In an example embodiment, a system for device control permission coordinating in a collaborative media consumption session includes the permissions coordinator 104. The permissions coordinator 104 operates to authenticate a group of users to join a collaborative media consumption session. The permissions coordinator 104 further operates to determine a set of control permissions for the user group such as {volume control, mute-unmute control, equalizer setting control} wherein the set of control permissions is based on a number of users in the user group. The permissions coordinator 104 further operates to communicate the set of control permissions to the user group. It may be the case where the set of control permission is none. For example, a group may be provided with no control over the audio output device.

A number of users denotes a precise count or quantity of users who belong to the user group. This count can fall, for example, within a specific range, such as four or fewer, three or fewer, or two or fewer users. In an example implementation, the group of users is a first group of users, and the set of control permissions is for the first user group and referred to as a first set of control permissions. Similarly, the number of users corresponding to the first group of users is a first number of users.

A collaborative media consumption session is enabled while maintaining authority over control permissions. A client device 102 with authority initiates a collaborative media consumption session and defines control permissions. This is accomplished, for example, by sending a request to establish a collaborative media consumption session along with a set of permissions, as illustrated by establish collaborative media consumption session (CMCS) with permissions request operation 210. These permissions are, in turn, stored for retrieval. In some embodiments, the system includes a permissions data store 106 in communication with the permissions coordinator 104 and configured to store a correlation between one or more control permissions and one or more user groups associated with the collaborative media consumption session.

A client device 102 that is authorized to set such control permissions is referred to interchangeably as a host device, a moderator device, or authorized device.

In some embodiments, the collaborative media consumption session can be established first, followed by the granting of permissions.

The permissions coordinator 104, in some embodiments, operates to cause the collaborative media consumption session to be established based on a CMCS establishment request from a host user, where the host user is a member of the first group. In an example implementation, the permissions coordinator 104 also operates to store in the permissions data store 106 a group control permission correlation between a collaborative media consumption session identifier associated with the collaborative media consumption session, a particular user group, and the set of control permissions.

In some embodiments, permissions coordinator 104 coordinates the collaborative media consumption session establishment by forwarding the request to establish the collaborative media consumption session to the CMCS server 108, as illustrated by forward establish collaborative media consumption session (CMCS) request operation 212a. In turn, the CMCS server 108 establishes the collaborative media consumption session and generates a collaborative media consumption session identifier corresponding to a collaborative media consumption session, as illustrated by establish collaborative media consumption session (CMCS) operation 213. In turn, the CMCS server 108 returns the collaborative media consumption session identifier (CMCS ID) to the permissions coordinator 104, as illustrated by return collaborative media consumption session parameters operation 212b.

In some embodiments, CMCS ID is a unique identifier that is not specific to any particular media content item. Instead, references to media content items are stored in a data store such as CMCS data store 110 in relation to the CMCS ID. The CMCS ID can, in turn, be resolved by the permissions coordinator 104 to reference one or more media content items (e.g., media content item identifiers such as an album identifier, a playlist identifier, podcast identifier, or other identifier that points to one or more media content items). The CMCS ID can further be used to select permissions associated with the audio output device 114.

In some embodiments, CMCS ID is a media content item identifier that can be resolved by the permissions coordinator 104 to reference one or more media content items (e.g., other media content item identifiers such as an album identifier, a playlist identifier, podcast identifier, or other identifier that points to one or more media content items). In this example, the collaborative media session identifier identifies a particular collaborative media consumption session through the use of a media content item identifier. The media content item identifier can, in some embodiments, be used to select permissions associated with the audio output device 114.

In addition to the CMCS ID parameter, other parameters associated with the collaborative media consumption session can be included in the communication sent to permissions coordinator 104. For example, parameters associated with an audio output device 114 can be sent to permissions coordinator 104 by return collaborative media consumption session parameters operation 212b. There are various possible implementations for obtaining the parameters associated with the audio output device 114.

In some implementations, the parameters associated with an audio output device 114 can be determined when the collaborative media consumption session is established. For example, the permissions coordinator 104 can cause CMCS server 108 to determine parameters defining the capabilities of the audio output device 114 when establishing the collaborative media consumption session. In an example implementation, CMCS server 108 operates in conjunction with device-capabilities service 112 to determine device capabilities associated with audio output device 114, as illustrated by get device capabilities operation 217. In turn, device-capabilities service 112 operates to determine the device parameters of the audio output device 114 by fetching the device capabilities from the audio output device 114, as illustrated by get device capabilities operation 219. In this embodiment, the device capability parameters (e.g., audio device capability parameters) are obtained directly from the audio output device 114. In some embodiments, device-capabilities service 112 stores the audio output device parameters it obtains from the audio output device 114 in a data store. In an example implementation, audio output device parameters are stored in collaborative media consumption session (CMCS) data store 110, as illustrated by store device capabilities operation 221.

In some implementations, the parameters associated with an audio output device 114 are stored in a data store (e.g., collaborative media consumption session data store 110), such stored parameters referred to herein as prestored audio output device parameters. Device-capabilities service 112 can, in turn, retrieve the prestored audio output device parameters from the data store (e.g., CMCS data store 110), as illustrated by retrieve prestored audio output device parameters operation 223.

In some embodiments, permissions coordinator 104 obtains the audio output device parameters by communicating with the device-capabilities service 112, as illustrated by get audio output device capabilities operation 218a and return audio output device capabilities operation 218b. Return audio output device capabilities operation 218b in this example, stores the audio output device capabilities in permissions data store 106.

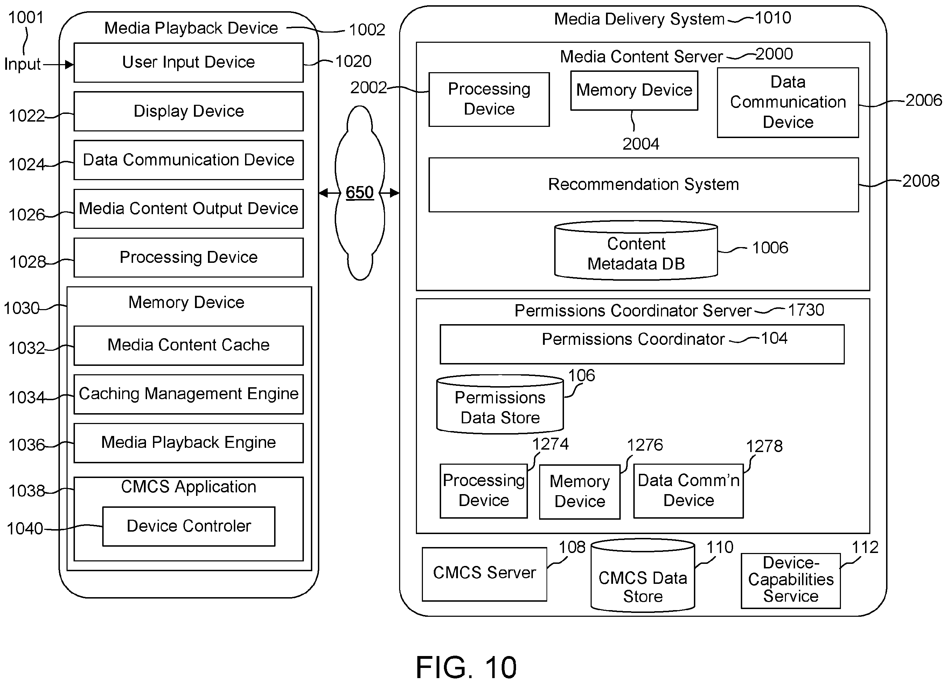

In an example implementation, device-capabilities service 112 is independent of CMCS server 108 (e.g., provided by a different entity or remote from CMCS server 108). In another example implementation, device-capabilities service 112 is a component of CMCS server 108 (e.g., provided by the same entity as CMCS server 108). In some embodiments, device-capabilities service 112 is a component of permissions coordinator 104. In some embodiments, permissions coordinator 104 is a component of CMCS server 108. In yet other embodiments, permissions coordinator 104 is a component of a media delivery system 1010 (or sub-component of the media delivery system 1010) described below in connection with FIG. 10.

In some embodiments, CMCS server 108 causes the collaborative media consumption session parameters corresponding to the collaborative media consumption session to be stored in collaborative media consumption session data store 110, as illustrated by store collaborative media consumption session parameters operation 215. The collaborative media consumption session parameters can include any one or a combination of a collaborative media consumption session identifier (CMCS ID), the audio output device parameters, and other parameters associated with the collaborative media consumption session (e.g., metadata regarding the collaborative media consumption session).

In some embodiments, permissions coordinator 104 operates to correlate the collaborative media consumption session identifier to particular permissions, as illustrated by correlate collaborative media consumption session identifier (CMCS ID) to permissions operation 214. In turn, permissions coordinator 104 operates to store the CMCS ID along with the corresponding permissions in permissions data store 106, as illustrated by store CMCS ID and permission operation 216. This allows a client device joining the collaborative media consumption session to retrieve its corresponding permissions. In some embodiments, permissions data store 106 and CMCS data store 110 are independent data stores. In some embodiments, permissions data store 106 and CMCS data store 110 are the same data store.

In turn, the collaborative media consumption session identifier (CMCS ID) and permissions are sent to the requesting client device, as illustrated by send CMCS ID and permissions operation 230.

In some embodiments, the CMCS ID with permissions are pushed (e.g., communicated over a public or private network) to authorized users who have been identified by the requesting device (e.g., the host device).

In some embodiments, a collaborative media consumption session has previously been created and users of client devices 102 would like to join the collaborative media consumption session and receive certain audio output device permissions, as represented generally by block 202. In an example embodiment, permissions coordinator 104 receives a request from a client device to join a previously established collaborative media consumption session, as illustrated by join established collaborative media consumption session operation 220. In some embodiments, the request includes a collaborative media consumption session identifier. In some embodiments, collaborative media consumption session identifier is a media content item identifier.

In turn, permissions coordinator 104 performs a resolve collaborative media consumption session identifier operation 222 that performs resolving a collaborative media consumption session join request received during the join established collaborative media consumption session operation 220 to a collaborative media consumption session identifier. The collaborative media consumption session identifier, in turn, is used by the permissions coordinator 104 to determine one or more group permissions from permissions data store 106, as illustrated by get group permissions operation 224a and return group permissions operation 224b.

In turn, the one or more permissions are sent to the requesting client device as illustrated by send collaborative media consumption session identifier (CMCS ID) and permissions operation 230. In some implementations, both the collaborative media consumption session identifier and the one or more permissions are sent to the requesting client device, as illustrated by send CMCS ID and permissions operation 230.

Once the requesting client device has received the audio output device permissions it can control a device according to the audio output device permissions, as illustrated by send device command operation 240.

In an example implementation, send device command operation 240 is communicated to the permissions coordinator 104 which, in turn, communicates a request to CMCS server 108 causing the CMCS server 108 to control the device (e.g., audio output device 114), as illustrated by control device according to permissions operation 242 and control device operation 244, respectively.

In some embodiments, the permissions coordinator 104 controls the audio output device 114 directly without CMCS server 108 involvement. This can be accomplished by establishing a separate connection directly with the audio output device 114.

In some embodiments, permissions coordinator 104 operates to request a size of the one or more user groups associated with a collaborative media consumption session, as illustrated by request user group size operation 248a. The CMCS server 108 further operates to monitor users connected to the collaborative media consumption session.

In some embodiments, CMCS server 108 operates to determine how many users are in each of the one or more user groups participating in the collaborative media consumption session, as illustrated by monitor user group size operation 246. In turn, CMCS server 108 sends the user group size(s) to the permissions coordinator 104, as illustrated by send user group size operation 248b. Permissions coordinator 104 then operates to perform an update permissions operation 250 to update the permissions associated to any of the users based on the group permissions rules. For example, it may be the case that a first user group is permitted to perform a first set of control permissions so long as the group size is less than a predetermined number (e.g., 3 users) and if the first group of users increases above the predetermined number, then the first set of control permissions changes. Similarly, it may be the case that a second user group is permitted to perform a second set of control permissions so long as the group size of the second group of users is less than a predetermined number (e.g., 3 users) and if the second group of users increases above the predetermined number, then the second set of control permissions changes.

For simplicity operation 248a, operation 248b, and operation 246 as shown in in FIG. 1 illustrate two non-limiting example implementations. In another non-limiting example implementation, permissions coordinator 104 operates to request a list of users associated with a collaborative media consumption session, as illustrated by request list of users operation 248a. The CMCS server 108 monitors the client devices connected to the collaborative media consumption session, as illustrated by monitor users operation 246. The CMCS server 108, in turn, provides the permissions coordinator 104 the list of the users connected to the collaborative media consumption session, as illustrated by send list of users operation 248b. Permissions coordinator 104 operates to match each user in the list of users to the one or more user groups, as illustrated by match user to group operation 252. The permissions coordinator 104 can further perform the update permissions operation 250 to update the permissions associated with any of the users based on the group permissions rules.

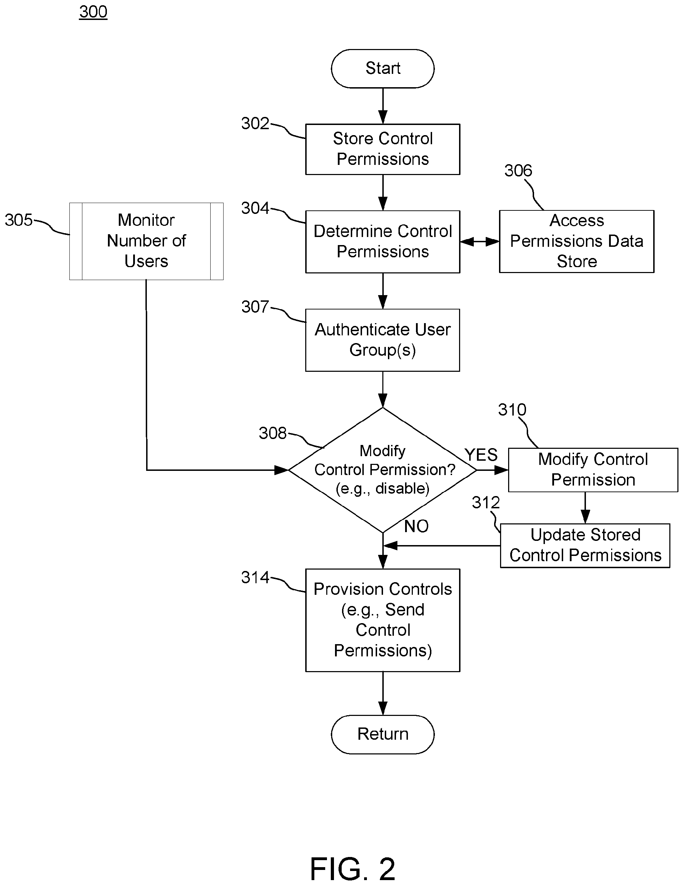

FIG. 2 illustrates an example process 300 for determining sets of control permissions for different user groups, according to an example embodiment. In some embodiments, the permissions data store 106 is linked to the permissions coordinator 104 and configured to store a correlation between specific control permissions and user groups involved in collaborative media consumption sessions.

In an example implementation, a permissions store operation 302 performs storing in a permissions data store 106 a group control permission correlation between a collaborative media consumption session identifier associated with the collaborative media consumption session, one or more user groups, and one or more sets of control permissions, where a first group control permissions correlation, the a user group, and a first set of control permissions are distinct from other group control permissions correlations, user group(s), and sets of control permissions.

In some embodiments, a permissions determination operation 304 performs determining control permissions for one or more groups of users. In an example implementation, a data store access operation 306 performs obtaining from the permissions data store 106 one or more control permissions assigned to the user groups.

This access can be determined based on the collaborative media consumption session's unique identifier (the collaborative media consumption session identifier or CMCS ID). In some embodiments, permissions data store 106 is in communication with the permissions coordinator 104 and configured to store a correlation between one or more control permissions and one or more user groups associated with the collaborative media consumption session. The permissions coordinator 104, in turn, further operates to retrieve from the permissions data store 106 the first set of control permissions for the first user group based on a first collaborative media consumption session identifier associated with the collaborative media consumption session.

In some embodiments, a second user group is introduced to provide distinct control permissions and access to a different subset of users within the collaborative media consumption session. Introducing a second user group allows for more flexible and targeted control over the control permissions based on the characteristics and requirements of this separate group. Introducing a second user group allows also enables a finer-grained control over control permissions and enhances the overall flexibility, customization, and scalability of the collaborative media consumption session. That is different user groups can have varying roles, responsibilities, or levels of interaction within the collaborative media consumption session.

In some embodiments, permissions determination operation 304, in addition to determining a first set of control permissions for a first user group, performs determining a second set of control permissions for the second user group, wherein the second set of control permissions is based on a second number of users in the second user group. Control provisioning operation 314, in turn, performs communicating the second set of control permissions to the second user group to the second group of users via their corresponding client devices 102. This is similar to how control provisioning operation 314 it would perform communicating a first set of control permissions to the first user group.

In some embodiments, an authentication operation 307 performs authenticating the first group of users and the second group of users to join the collaborative media consumption session.

In some embodiments, the permissions coordinator 104 is further configured to modify a control permission of a user in the first user group. In an example implementation, when a determination has been made that a permission should be modified, as represented by decision block 308 ("YES"), the permissions coordinator 104 performs a modify control permission operation 310 to modify a control permission for a user. An example modification of a permission control could be to disable a particular control.

In the case where a control permission has provided to a group of users, optionally, after enabling the control permission, the permissions coordinator 104 sends a message to the applicable group of client devices indicating that a control permission has been granted. Conversely, in the case where a control permission has been modified by disabling it, optionally, after disabling the control permission, the permissions coordinator 104 sends a message to the applicable group of client devices indicating that a control permission has been modified (e.g., that a particular control permission is no longer available). A data store update operation 312 performs updating the permissions data store 106 with an updated permission correlation.

In turn, a control provisioning operation 314 performs sending the updated permissions to the group of client devices 102 by communicating to the group of client devices 102 their new permissions.

In some embodiments, the permissions coordinator 104 performs a permission management operation to determine control permissions and allocate the permissions appropriately based on the session's context and user group characteristics. For example, the permissions coordinator 104 can perform permissions determination operation 304 by determining a collaborative media consumption session identifier associated with the collaborative media consumption session, determine the first number of users in the first user group based on the collaborative media consumption session identifier, and set the first set of control permissions based on the first number of users.

Still referring to FIG. 2, in certain instances, the permissions coordinator 104 performs a monitoring operation 305 that actively monitors the sizes of both the first user group and the second user group during the collaborative media consumption session. Upon detecting any changes in the combined user counts of these groups, the permissions coordinator 104 dynamically modifies one or more control permissions linked to either or both of these groups. This adjustment results in the creation of updated control permissions. Subsequently, the permissions coordinator 104 distributes these updated permissions to the relevant user groups, e.g., the first group, the second group, or both, as applicable, as illustrated by control provisioning operation 314. This process ensures that the control permissions remain aligned with the evolving composition of user groups throughout a collaborative media consumption session.

In some embodiments, monitoring operation 305 performs detecting, during the collaborative media consumption session, a change in a combination of the first number of users in the first user group and the second number of users in the second user group. In turn, when a determination has been made that a permission should be modified, as represented by decision block 308 ("YES"), the permissions coordinator 104 performs a modify control permission operation 310 to modify a control permission for a group of users.

In the case where a control permission has been modified, optionally, the permissions coordinator 104 sends a message to the applicable group of client devices indicating that a control permission has been modified (e.g., that a particular control permission is no longer available or otherwise disabled). A data store update operation 312 performs updating the permissions data store 106 with an updated permission correlation.

This enables an update of at least one control permission associated with (i) the first user group, (ii) the second user group, or (iii) both the first user group and the second user group, thereby creating at least one updated control permission. In turn, control provisioning operation 314 performs sending at least one updated control permission to (i) the first user group, (ii) the second user group, or (iii) both the first user group and the second user group, correspondingly.

In some embodiments, a collaborative media consumption session is associated with a collaborative media consumption session identifier to ensure that participants engage with the intended media content items. In an example implementation, the collaborative media consumption session identifier is a unique identifier that has been generated for the CMCS (e.g., by CMCS server 108). References to content are stored in relation to the unique identifier (i.e., the CMCS ID). The unique identifier (e.g., the CMCS ID) can, in turn, be resolved to reference one or more media content items (e.g., media content item identifiers such as an album identifier, a playlist identifier, podcast identifier, or other identifier that points to one or more media content items).

In some example implementations, the collaborative media consumption session identifier includes a media content item identifier, and the media content item identifier is resolved to reference one or more other media content items.

In some embodiments, the collaborative media consumption session is associated with a collaborative media consumption session identifier, and the collaborative media consumption session identifier is represented by at least one or more of a scannable visual code, an audio signal with embedded acoustic fingerprint or Uniform Resource Locator (URL) or Uniform Resource Identifier (URI), a Bluetooth signal, or an ultra wide band signal.

In some embodiments, the size of the first user group conforms to a specific criterion, where the number of users falls within a specified range. In a non-limiting example implementation, the first number of users in the first user group is less than or equal to three.

Another embodiment provides a method for device control permission coordinating in a collaborative media consumption session.

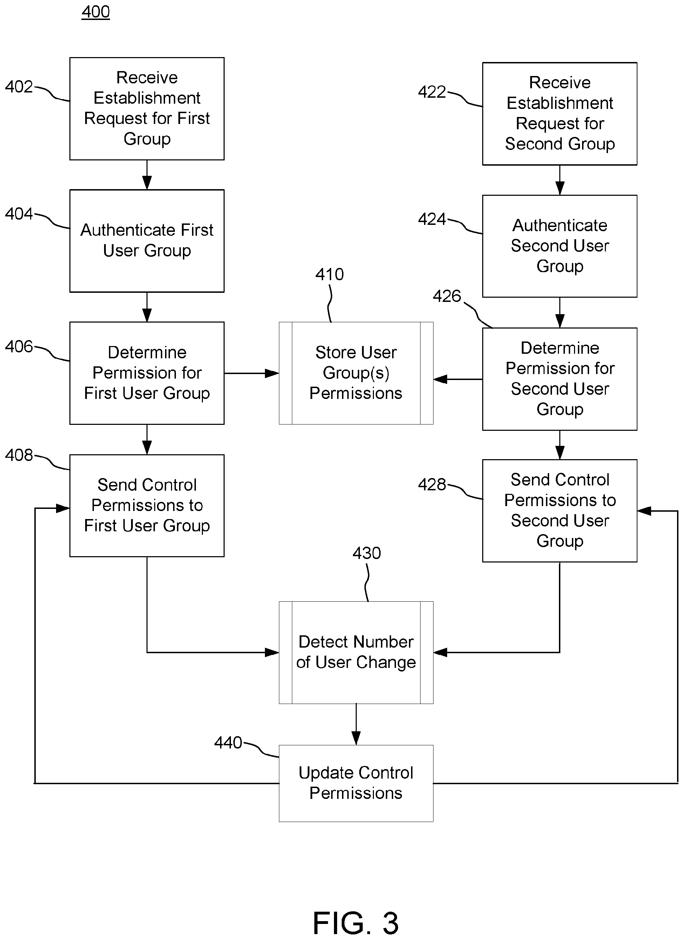

FIG. 3 illustrates an example process for authenticating and setting control permissions for different user groups, according to an example embodiment.

A first establishment request operation 402 performs receiving an establishment request from a client device 102 that is authorized to set device control permissions. A client device 102 that is authorized to set such device control permissions is referred to interchangeably as a host device, a moderator device, or authorized device.

A first collaborative media consumption session (CMCS) authorization operation 404 performs authenticating a first group of users to join a collaborative media consumption session. In turn, a first control permission determination operation 406 performs determining a first set of control permissions for the first user group, wherein the first set of control permissions is based on a first number of users in the first user group. A first control permissions send operation 408, in turn, performs communicating the first set of control permissions to the first user group.

In an example implementation, a control permission correlation storing operation 410 performs storing a correlation between one or more control permissions and the first user group. If multiple sets of permission corresponding to different user groups are established, then the storing operation 308 can further operate to perform storing the correlations between one or more control permission and the one or more user groups associated with the collaborative media consumption session.

In some embodiments, the method performs causing the collaborative media consumption session to be established based on a collaborative media consumption session establishment request from a host user, where the host user is a member of the first group. In turn, the control permission correlation storing operation 410 performs storing a first group control permission correlation between a first collaborative media consumption session identifier associated with the collaborative media consumption session, the first user group, and the first set of control permissions.

A second establishment request operation 422 performs receiving an establishment request from the client device 102 that is authorized to set device control permissions.

A second collaborative media consumption session (CMCS) authorization operation 424 performs authenticating a second group of users to join a collaborative media consumption session. In turn, a second control permission determination operation 426 performs determining a second set of control permissions for the second user group, wherein the second set of control permissions is based on a second number of users in the second user group. A second control permissions send operation 428, in turn, performs communicating the second set of control permissions to the second user group.

In an example implementation, the control permission correlation storing operation 410 further performs storing a correlation between one or more control permissions and the second user group.

A change detecting operation 430 performs, during the collaborative media consumption session, detecting a change in a combination of the first number of users in the first user group and the second number of users in the second user group.

A control permissions update operation 440 performs updating at least one control permission associated with (i) the first user group, (ii) the second user group, or (iii) both the first user group and the second user group, thereby creating at least one updated control permission. A control permissions update operation 440 further performs sending at least one updated control permission to (i) the first user group, (ii) the second user group, or (iii) both the first user group and the second user group, correspondingly.

The first number of users in the first user group is within a first specified range. The second number of users in the second user group is within a second specified range.

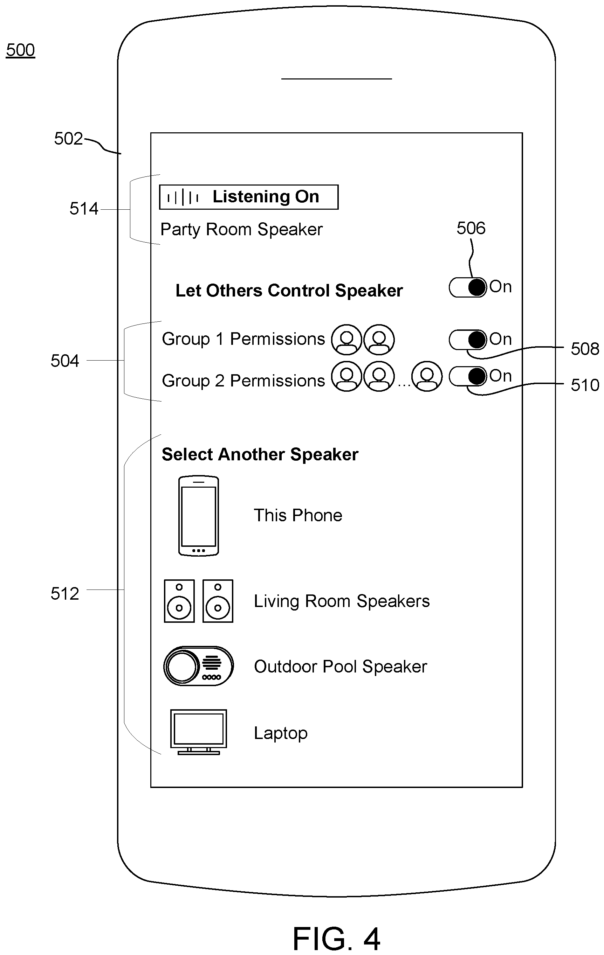

FIG. 4 is a window or screenshot 500 generated by a graphical user interface of a media playback device 502 for coordinating control permissions in a collaborative media consumption session, according to an example embodiment. Media playback device 502, in this example use case, is a mobile device executing an application that enables an authorized user to authorize device control permissions for one or more groups. In the example shown in FIG. 4, two group permission 504 are shown. Particularly, the group permissions 504 include a first group of permissions for a first group of users ("Group 1 Permissions") and a second group of permissions for a second group of users ("Group 2 Permissions"). The authorized users can, via the graphical user display of media playback device 502, select whether any other user has the ability to control the audio output device through which the media content is being played. This can be accomplished via a general permissions control element 506 such as a toggle element. In this example implementation, general permissions control element 506 is a user interface element that allows users to switch between two states, "on" and "off," by clicking or tapping on it. In addition, media playback device 502 can be configured to display a first user group permissions control element 508 and a second user group permissions control element 510. First user group permissions control element 508 is configured to provide a first set of control permissions for the first user group and second user group permissions control element 510 is configured to provide a second set of control permissions for the second user group.

The authorized user is further permissioned to select another audio output device through which participants in a collaborative media consumption session (CMCS) the authorized user has established as illustrated by audio output selection portion 512 presented via the graphical user interface of the display device of the media playback device 502. In an example implementation, a selected device indication 514 is presented via the graphical user interface of the display device of the media playback device 502.

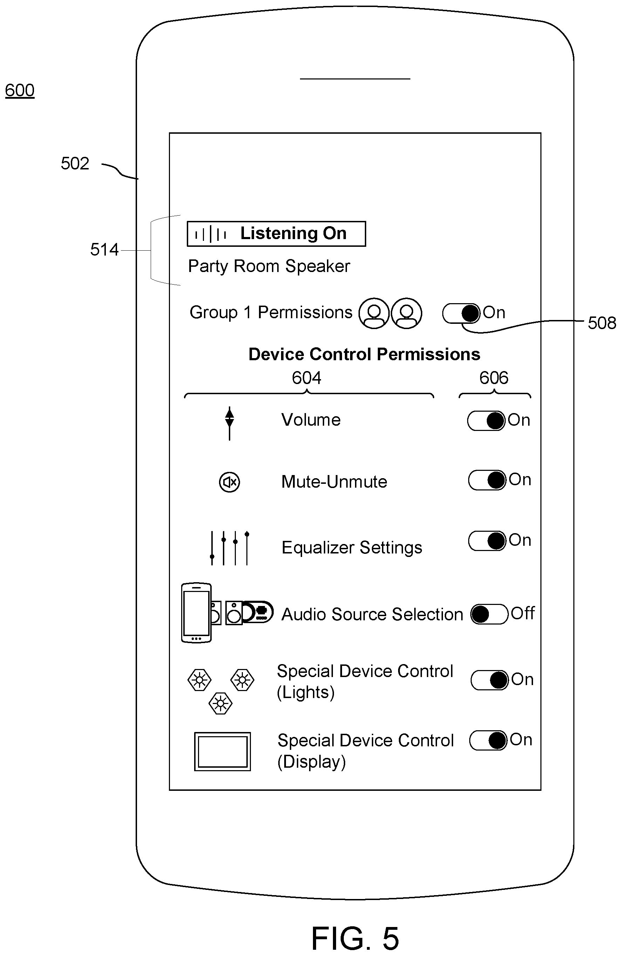

FIG. 5 is a screenshot 600 generated by a graphical user interface of a media playback device for coordinating control permissions of a particular user group in a collaborative media consumption session, according to an example embodiment. A selected device indication 514 is presented via the graphical user interface of the display device of the media playback device 502. The screenshot 600 illustrates a first user group permissions control element 508 that enables or disables a first set of control permissions for a first group of users.

This screenshot illustrates an example of how an authorized user can enable certain permissions for a particular group of users.

Screenshot 600 further illustrates example output device features 604 of an audio output device that can be controlled using device permission control elements 606. The device permission control elements 606 can be toggled to permit or deny a user of the particular group of users to control. As illustrated in the example screenshot, some of the features of the audio output device are enabled for the first group of users while others are not.

In some embodiments the device control permissions are determined based on the number of users in the first group of users.

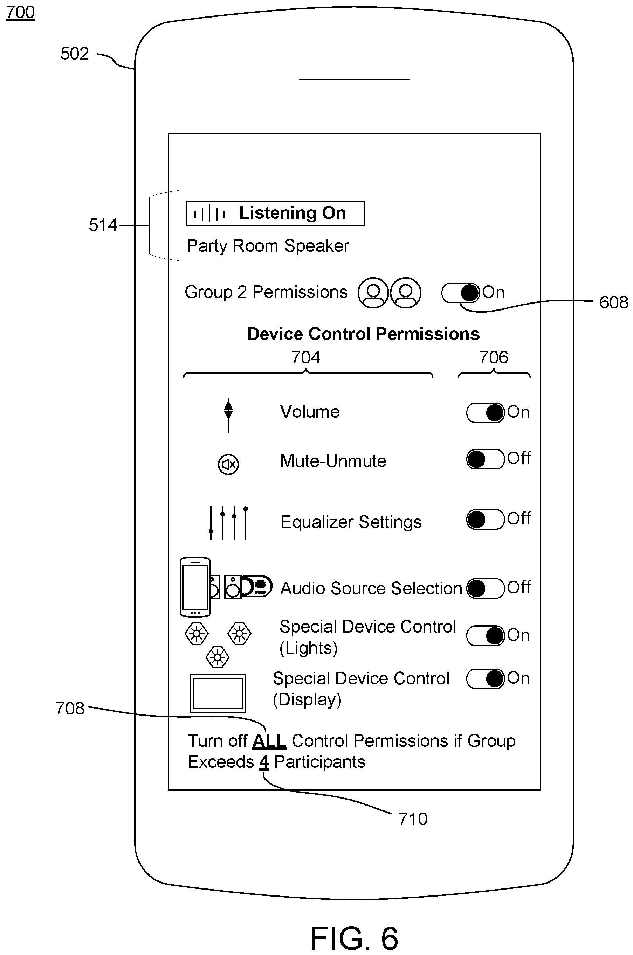

FIG. 6 is a screenshot 700 generated by the graphical user interface of a media playback device for coordinating control permissions of a particular user group in a collaborative media consumption session, according to an example embodiment. While the example shown in FIG. 6 is described as being for a second group of users, it is also applicable for a first group of users. A selected device indication 514 is presented via the graphical user interface of the display device of the media playback device 502. The screenshot 700 illustrates a second user group permissions control element 608 that enables or disables a second set of control permissions for a second group of users.

This screenshot illustrates another example of how an authorized user can enable certain permissions for a particular group of users.

Screenshot 700 further illustrates example output device features 704 of an audio output device that can be controlled using device permission control elements 706. The device permission control elements 706 can be toggled to permit or deny a user of the particular group of users to control. As illustrated in the example screenshot 700, some of the features of the audio output device are enabled for the second group of users while others are not.

In this example screenshot 700 the authorized user has the ability to set whether one or more of the enabled permissions are disabled if the size of the user group exceeds a predetermined number 710. In the example screenshot 700 if FIG. 6, all of the permissions are disabled if the number of users in the second group of users exceeds four (4).

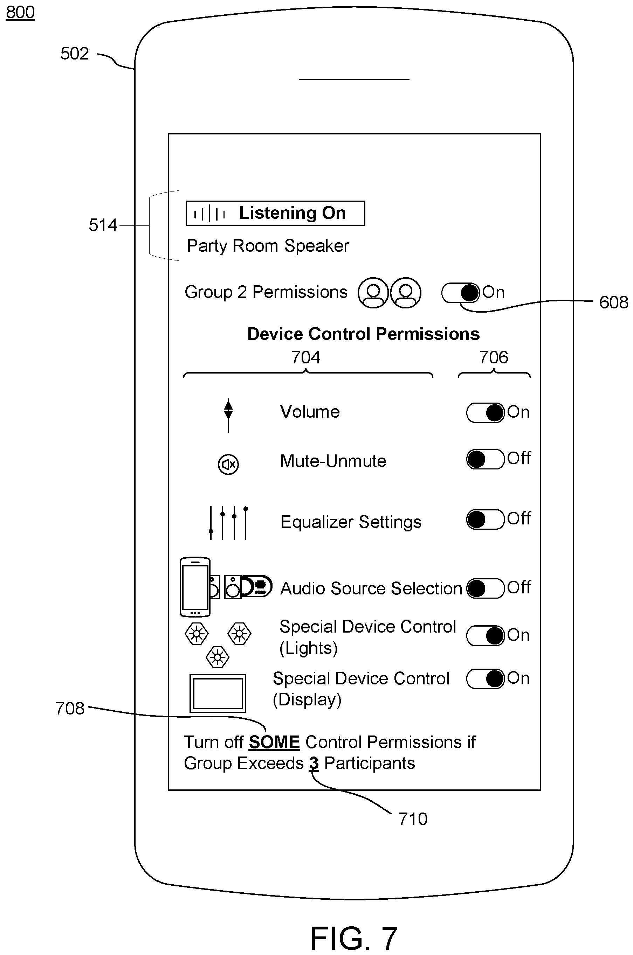

FIG. 7 is a screenshot 800 generated by a graphical user interface of a media playback device for coordinating control permissions of a particular user group in a collaborative media consumption session, according to an example embodiment. The screenshot 800 of FIG. 7 is similar to the screenshot 700 of FIG. 6 except that the authorized users has instructed the permissions coordinator to turn off some (708) of the control permissions if the number of users in the second group of users exceeds a predetermined amount 710, which in this example is three (3).

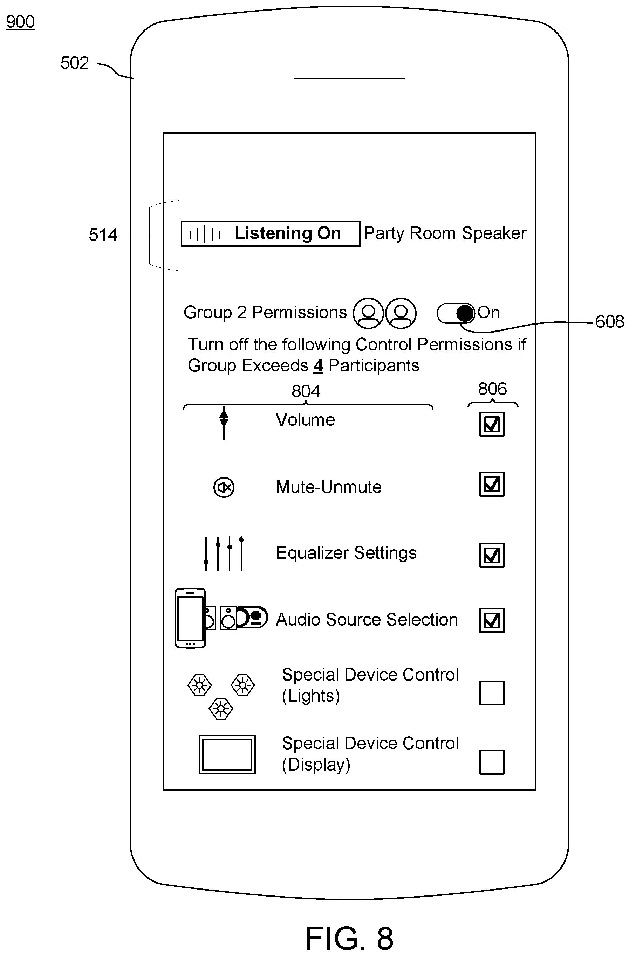

FIG. 8 is a screenshot 900 generated by the graphical user interface of a media playback device for coordinating which permissioned controls are available to a particular user group after the size of the user group exceeds a predetermined number, according to an example embodiment. In this example a list of features that can be disabled 804 is displayed via the graphical user interface of the media playback device 502. Device permission control elements 806 are presented in the form of selectable check boxes. When any of the device permission control elements 806 are selected, the permissions coordinator is configured to disable the corresponding audio device feature for the second group of users. In this example, two of the special device controls, lights and display, are still enabled for each participant in the second group of users if the number of participants in the collaborative media consumption session exceeds the predetermined number, in this use case being four (4).

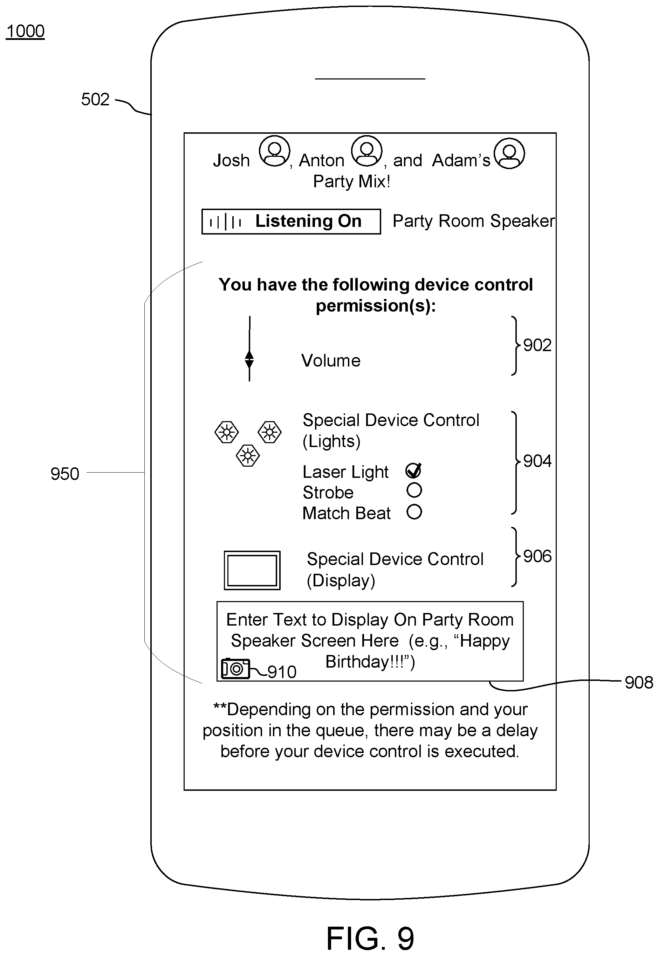

FIG. 9 is a screenshot 1000 generated by a graphical user interface of a media playback device 502 for selecting permissioned control parameters in a collaborative media consumption session, according to an example embodiment. Here, the media playback device 502 is that of a user of the first group of users or the second group of users. As shown in screenshot 1000 each feature has its own set of controls 950 or fields. In this example, the user has permission to control the volume of the audio output device using a volume control element 902. The user of this group also has permission to operate a special component of the audio output device, such as lights. The lights are control by control elements 904 associated with the particular feature of the audio output device. Yet another example of a special component of the audio output device can be a display feature which enables the user to enter text into a text field box 908. Any text entered into the text field box 908 is displayed on the display output of the audio output device at the appropriate time. Instead of text, an image or video can be selected to be displayed on the display output of the audio output device using a photo/video select element 910 which causes the users photo library to open for selection of a photo or video.

FIG. 10 is a representative view of a system in which some embodiments of the invention may be implemented. The system includes a client device such as media playback device 1002 and a media delivery system 1010. The media delivery system 1010 operates to provide media content to one or more media playback devices, such as the media playback device 1002, via the network 650. The media playback device 1002 operates as the client device 102 described above in connection with FIG. 1 and as the media playback device 502 described above in connection with FIGs. 4-9.

The media playback device 1002 includes a user input device 1020, a display device 1022, a data communication device 1024, a media content output device 1026, a processing device 1028, and a memory device 1030.

The media playback device 1002 operates to play media content. For example, the media playback device 1002 is configured to play media content that is provided (e.g., streamed or transmitted) by a system external to the media playback device 1002, such as the media delivery system 1010, another system, or a peer device. In other examples, the media playback device 1002 operates to play media content stored locally on the media playback device 1002. In yet other examples, the media playback device 1002 operates to play media content that is stored locally as well as media content provided by other systems.

In some embodiments, the media playback device 1002 is a handheld or portable entertainment device, smart speaker, smartphone, tablet, watch, wearable device, or any other type of computing device capable of playing certain types of media content (e.g., audio, video, text, etc.). In other embodiments, the media playback device 1002 is a laptop computer, desktop computer, television, gaming console, set-top box, network appliance, blue-ray or DVD player, media player, stereo, or radio, etc.

A user input device 1020 of media playback device 1002 operates to receive a user input from a user for controlling the media playback device 1002. The user input can include a manual input and/or a voice input. In some embodiments, the user input device 1020 includes one or more buttons, keys, touch levers, switches, and/or other mechanical input devices for receiving the input 501.

In some embodiments, the user input device 1020 can detect sounds including the voice input such as a voice of a user (e.g., an utterance) for controlling playback of media content via the media playback device 1002.

In some embodiments, a display device 1022 is provided that operates to display a graphical user interface that displays information for interacting with the media playback device 1002. Examples of such information include media content playback information, notifications, and other information. In some embodiments, the display device 1022 is configured as a touch sensitive display and includes the user input device 1020 for receiving the input 1001 from a selector (e.g., a finger, stylus etc.) controlled by a user. In some embodiments, therefore, the display device 1022 operates as both a display device and a user input device.

The data communication device 1024 operates to enable the media playback device 1002 to communicate with one or more computing devices over one or more networks, such as the network 650. For example, the data communication device 1024 is configured to communicate with the media delivery system 1010 and receive media content from the media delivery system 1010 at least partially via the network 650. The data communication device 1024 can be a network interface of various types which connects the media playback device 1002 to the network 650.

The media content output device 1026 operates to output media content (e.g., via one or more speakers which are incorporated in the media playback device 1002 or via external speaker such as headphones, a portal speaker, a vehicle entertainment system, etc.).

The processing device 1028, in some embodiments, comprises one or more central processing units (CPU). In other embodiments, the processing device 1028 additionally or alternatively includes one or more digital signal processors, graphical processing units (GPUs), field-programmable gate arrays, or other electronic circuits.

The memory device 1030 typically includes at least some form of non-transitory computer-readable media. Non-transitory computer-readable media includes any available media that can be accessed by the media playback device 1002, such as volatile and nonvolatile, removable and non-removable media implemented in any device configured to store information such as computer readable instructions, data structures, program modules, or other data. Memory device 1030 can also include, but is not limited to, random access memory, read only memory, electrically erasable programmable read only memory, flash memory and other memory technology, compact disc read only memory, blue ray discs, digital versatile discs or other optical storage, magnetic storage devices, or any other medium that can be used to store the desired information and that can be accessed by the media playback device 1002 in a non-transitory manner.

The memory device 1030 operates to store data and instructions. In some embodiments, the memory device 1030 stores instructions for a caching management engine 1034, a media playback engine 1036, and a collaborative media consumption session (CMCS) application 1038.

Some embodiments of the memory device 1030 include a media content cache 1032. The media content cache 1032 stores media content items, such as media content items that have been received from the media delivery system 1010. In some embodiments, the media content cache 1032 also stores metadata about media content items such as title, artist name, album name, length, genre, mood, era, etc. The media content cache 1032 can further store playback information about the media content items and/or other information associated with the media content items.

The caching management engine 1034 is configured to receive and cache media content in the media content cache 1032 and manage the media content stored in the media content cache 1032. In some embodiments, when media content is streamed from the media delivery system 1010, the caching management engine 1034 operates to cache at least a portion of the media content into the media content cache 1032. In other embodiments, the caching management engine 1034 operates to cache at least a portion of media content into the media content cache 1032 while online so that the cached media content is retrieved for playback while the media playback device 1002 is offline.

The media playback engine 1036 operates to play media content to a user. As described herein, the media playback engine 1036 is configured to communicate with the media delivery system 1010 to receive one or more media content items (e.g., through a media stream). In other embodiments, the media playback engine 1036 is configured to play media content that is locally stored in the media playback device 1002.

In some embodiments, the media playback engine 1036 operates to retrieve one or more media content items that are either locally stored in the media playback device 1002 or remotely stored in the media delivery system 1010. In some embodiments, the media playback engine 1036 is configured to send a request to the media delivery system 1010 for media content items and receive information about such media content items for playback.

In some embodiments, the CMCS application 1038 operates to connect devices that also support a CMCS application. When two or more devices use a particular application, such as the CMCS application, to communicate with each other, they are compatible devices. CMCS application 1038, in some embodiments, includes instructions that, when executed by the one or more processing devices 1028 of the media playback device 1002, perform a connect-state service to provide information corresponding to client device including, for example, corresponding playback context information. In some embodiments, CMCS application 1038 includes instructions that, when executed by the one or more processing devices 1028 of the media playback device 1002, perform a playback request operation to orchestrate the playback (including, if applicable any synchronization) of a collaborative media consumption session.

The CMCS application 1038, in some implementations, includes a device controller 1040. Device controller 1040 enables media playback device to control features of devices (e.g., audio output devices) used to playback media content items in a collaborative media consumption session according to permissions provided by a permissions coordinator.

Media delivery system 1010 includes a media content server 2000, a recommendation system 2008, and a permissions coordinator server 1730.

Media delivery system 1010 interacts with the media playback device 1002 to provide the media playback device 1002 with various functionalities.

In at least some embodiments, the media content server 2000 and the permissions coordinator server 1730 (or components thereof) are provided by separate computing devices. In other embodiments, the media content server 2000 and the permissions coordinator server 1730 are provided by the same computing device(s).

The media content server 2000 transmits stream media to media playback devices such as the media playback device 1002. In some embodiments, the media content server 2000 includes a processing device 2002, a memory device 2004, and a data communication device 2006. The processing device 2002 and the memory device 2004 may be similar to the processing device 1028 and the memory device 1030, respectively, which have each been previously described. Therefore, the description of the processing device 2002 and the memory device 2004 are omitted for brevity purposes.

The data communication device 2006 operates to communicate with other computing devices over one or more networks, such as the network 650. Examples of the data communication device include one or more wired network interfaces and wireless network interfaces.

In some embodiments, media content server 2000 executes a media server application configured to stream media content, such as music or other audio, video, or other suitable forms of media content. The media server application can include a media stream service that operates to buffer media content, such as media content items, for streaming to one or more media streams.

The media content server 2000 can receive requests or other communication from media playback devices or other systems, such as the media playback device 1002, to retrieve media content items from the media content server 2000.

In some embodiments, media content server 2000 stores media content items, media content metadata, media contexts, user accounts, and taste profiles.

Media content items may be audio, video, podcasts or any other type of media content, which may be stored in any data format for storing media content.

Media content metadata, as used herein, provides various information (also referred to herein as attribute(s)) associated with the media content items. In addition, or alternatively, the media content metadata provides various information associated with the media contexts. In some embodiments, the media content metadata includes one or more of title, artist name, album name, length, genre, mood, era, etc.

Media contexts can include playlists. The playlists are used to identify one or more of the media content items. In some embodiments, the playlists identify a group of the media content items in a particular order. In other embodiments, the playlists merely identify a group of the media content items without specifying a particular order. Some, but not necessarily all, of the media content items included in a particular one of the playlists are associated with a common characteristic such as a common genre, mood, or era.

In some embodiments, a user can listen to media content items in a playlist by selecting the playlist via a media playback device, such as the media playback device 1002. The media playback device 1002 then operates to communicate with the media delivery system 1010 so that the media delivery system 1010 retrieves the media content items identified by the playlist and transmits data for the media content items to the media playback device for playback.

In some embodiments, the playlist includes one or more playlist descriptions. The playlist descriptions include information associated with the playlist. The playlist descriptions can include a playlist title. In some embodiments, the playlist title can be provided by a user using the media playback device 1002. In other embodiments, the playlist title can be provided by a media content provider (or a media-streaming service provider). In yet other embodiments, the playlist title can be automatically generated.

In some embodiments, the playlist descriptions can take the form of one or more vectors, matrices, lists, tables, and other data structures. A form of cultural metadata particularly useful for comparing music is a description vector. A description vector is a multi-dimensional vector associated with a track, album, or artist. Each term of the description vector indicates the probability that a corresponding word or phrase would be used to describe the associated track, album or artist. Each term of the description vector indicates the probability that a corresponding word or phrase would be used to describe the associated track, album or artist.

In some embodiments, the playlist includes a list of media content item identifications (IDs). The list of media content item identifications includes one or more media content item identifications that refer to respective media content items. Each media content item is identified by a media content item ID and includes various pieces of information, such as a media content item title, artist identification (e.g., individual artist name or group name, or multiple artist names or group names), and media content item data. In some embodiments, the media content item title and the artist ID are part of the media content metadata, which can further include other attributes of the media content item, such as album name, length, genre, mood, era, etc. as described herein.

At least some of the playlists may include user-created playlists. For example, a user of a media streaming service provided using the media delivery system 1010 can create a playlist and edit the playlist by adding, removing, and rearranging media content items in the playlist. A playlist can be created and/or edited by a group of users together to make it a collaborative playlist. In some embodiments, user-created playlists can be available to a particular user only, a group of users, or to the public based on a user-definable privacy setting.

In some embodiments, when a playlist is created by a user or a group of users, the media delivery system 1010 operates to generate a list of media content items recommended for the particular user or the particular group of users. In some embodiments, such recommended media content items can be selected based at least on the taste profiles as described herein. Other information or factors can be used to determine the recommended media content items.

In addition, or alternatively, at least some of the playlists are created by a media streaming service provider. For example, such provider-created playlists can be automatically created by the media delivery system 1010. In some embodiments, a provider-created playlist can be customized to a particular user or a particular group of users. By way of example, a playlist for a particular user can be automatically created by the media delivery system 1010 based on the user's listening history (e.g., the user's taste profile) and/or listening history of other users with similar tastes. In other embodiments, a provider-created playlist can be configured to be available for the public in general. Provider-created playlists can also be sharable with other users.

Referring still to FIG. 10, in some embodiments, permissions coordinator server 1730 includes a permissions coordinator 104 and permissions data store 106. The permissions coordinator 104 and the permissions data store 106 operate as described above in connection with FIG. 1.

In other embodiments, as shown in FIG. 10, media content server 2000 hosts the content metadata DB 1006. While in the example embodiment depicted in FIG. 10, permissions coordinator 104 is embodied in a remote server such as permissions coordinator server 1730, it should be understood that in some embodiments the permissions coordinator 104 can be implemented in any one or a combination of an edge device, a remote server, and a middleware component.

In some embodiments, the permissions coordinator server 1730 includes a processing device 1274, a memory device 1276, and a data communication device 1278. The processing device 1274, the memory device 1276, and the data communication device 1278 for permissions coordinator server 1730 may be similar to the processing device 1028, the memory device 1030, and the data communication device 1024, respectively, which have each been previously described, and are omitted for brevity purposes.

In some embodiments, media delivery system 1010 further includes a collaborative media consumption session (CMCS) server 108, a collaborative media consumption session (CMCS) data store 110, a device-capabilities service 112. The collaborative media consumption session (CMCS) server 108, a collaborative media consumption session (CMCS) data store 110, and a device-capabilities service 112 operate as described above.

Software embodiments of the example embodiments presented herein may be provided as a computer program product, or software, that may include an article of manufacture on a machine accessible or machine-readable medium having instructions. The instructions on the machine accessible or machine-readable medium may be used to program a computer system or other electronic device. The machine-readable medium may include, but is not limited to, optical disks, CD-ROMs, and magneto-optical disks or other type of media/machine-readable medium suitable for storing or transmitting electronic instructions. The techniques described herein are not limited to any particular software configuration. They may find applicability in any computing or processing environment. The terms "machine accessible medium" or "machine readable medium" used herein shall include any medium that is capable of storing, encoding, or transmitting a sequence of instructions for execution by the machine and that cause the machine to perform any one of the methods described herein. Furthermore, it is common in the art to speak of software, in one form or another (e.g., program, procedure, process, application, module, unit, logic, and so on) as taking an action or causing a result. Such expressions are merely a shorthand way of stating that the execution of the software by a processing system causes the processor to perform an action to produce a result.

The performance of the one or more actions enables enhanced and automated selection and output of the data corresponding to media content. This means that data which is selected and output according to the processes described herein are of enhanced contextual relevance and in this regard can be automatically selected and output at significantly improved rates, for example, the throughput of data selection to its output, or speed of data selection is significantly enhanced. The data which is automatically selected and output according to the processes described herein can thus be pre-emptively obtained and stored locally within a computer, or transmitted to the computer, such that the selected data is immediately accessible and relevant to a local user of the computer.

Not all of the components are required to practice the invention, and variations in the arrangement and type of the components may be made without departing from the spirit or scope of the invention. As used herein, the term "component" is applied to describe a specific structure for performing specific associated functions, such as a special purpose computer as programmed to perform algorithms (e.g., processes) disclosed herein. The component can take any of a variety of structural forms, including instructions executable to perform algorithms to achieve a desired result, one or more processors (e.g., virtual or physical processors) executing instructions to perform algorithms to achieve a desired result, or one or more devices operating to perform algorithms to achieve a desired result.

According to certain examples, there is also disclosed:
Example 1. A system for device control permission coordinating in a collaborative media consumption session, comprising: a permissions coordinator configured to: authenticate a first group of users to join a collaborative media consumption session, determine a first set of control permissions for the first user group, wherein the first set of control permissions is based on a first number of users in the first user group, and communicate the first set of control permissions to the first user group
Example 2. The system of example 1, wherein the first set of control permissions includes one or more control permissions corresponding to a hardware function associated with an audio output device configured to playback media content associated with the collaborative media consumption session.
Example 3. The system of example 2, wherein the one or more control permissions include any one or a combination of: a volume control providing a permission to adjust the volume level of the audio output device, a mute-unmute control providing a permission to mute or unmute an audio output of the audio output device, an equalizer setting control providing a permission to modify one or more audio equalizer settings of the audio output device including any one or a combination of bass and treble, an audio source selection control providing a permission to choose a source of audio input for the audio output device, an audio effects control providing a permission to apply an audio effect to the media content, an audio mode control providing a permission to switch between two or more different audio modes of the audio output device, and a balance-fade control providing a permission to adjust a balance between left and right speakers of the audio output device, or a fade between front and rear speakers of the playback device in a multi-speaker configuration.
Example 4. The system of any of examples 1 to 3, further comprising: a permissions data store in communication with the permissions coordinator and configured to store a correlation between one or more control permissions and one or more user groups associated with the collaborative media consumption session; and said permissions coordinator further configured to: cause the collaborative media consumption session to be established based on a collaborative media consumption session establishment request from a host user, the host user being a member of the first group, and store in the permissions data store a first group control permission correlation between a first collaborative media consumption session identifier associated with the collaborative media consumption session, the first user group, and the first set of control permissions
Example 5. The system of any of examples 1 to 4, further comprising: a permissions data store in communication with the permissions coordinator and configured to store a correlation between one or more control permissions and one or more user groups associated with the collaborative media consumption session; and the permissions coordinator further configured to retrieve from the control permissions data store the first set of control permissions for the first user group based on a first collaborative media consumption session identifier associated with the collaborative media consumption session.
Example 6. The system of any of examples 1 to 5, wherein the permissions coordinator is further configured to disable a control permission of a user in the first user group.
Example 7. The system of any of examples 1 to 6, wherein the permissions coordinator is further configured to: determine a collaborative media consumption session identifier associated with the collaborative media consumption session, determine the first number of users in the first user group based on the collaborative media consumption session identifier, and set the first set of control permissions based on the first number of users.
Example 8. The system of any of examples 1 to 7, wherein the permissions coordinator further configured to: authenticate a second group of users to join the collaborative media consumption session, determine a second set of control permissions for the second user group, wherein the second set of control permissions is based on a second number of users in the second user group, and communicate the second set of control permissions to the second user group.
Example 9. The system of any of examples 1 to 8, wherein the permissions coordinator further configured to: detect, during the collaborative media consumption session, a change in a combination of the first number of users in the first user group and the second number of users in the second user group, update at least one control permission associated with (i) the first user group, (ii) the second user group, or (iii) both the first user group and the second user group, thereby creating at least one updated control permission, and send at least one updated control permission to (i) the first user group, (ii) the second user group, or (iii) both the first user group and the second user group, correspondingly.
Example 10. The system of any of examples 1 to 9, wherein: the collaborative media consumption session is associated with a collaborative media consumption session identifier, and the collaborative media consumption session identifier includes a playlist identifier corresponding to a playlist of media content items.
Example 11. The system of any of examples 1 to 10, wherein: the collaborative media consumption session is associated with a collaborative media consumption session identifier, and the collaborative media consumption session identifier is represented by at least one or more of a scannable visual code, an audio signal with embedded acoustic fingerprint or Uniform Resource Locator (URL) or Uniform Resource Identifier (URI), a Bluetooth signal or an ultra wide band signal.
Example 12. The system of any of examples 1 to 11, wherein the first number of users in the first user group is within a specified range.
Example 13. A method for device control permission coordinating in a collaborative media consumption session, comprising: authenticating a first group of users to join a collaborative media consumption session; determining a first set of control permissions for the first user group, wherein the first set of control permissions is based on a first number of users in the first user group; and communicating the first set of control permissions to the first user group.
Example 14. The method of example 13, further comprising: storing a correlation between one or more control permissions and one or more user groups associated with the collaborative media consumption session; causing the collaborative media consumption session to be established based on a collaborative media consumption session establishment request from a host user, the host user being a member of the first group; and storing a first group control permission correlation between a first collaborative media consumption session identifier associated with the collaborative media consumption session, the first user group, and the first set of control permissions.
Example 15. The method of example 13 or 14, further comprising: storing a correlation between one or more control permissions and one or more user groups associated with the collaborative media consumption session; and retrieving from a data store the first set of control permissions for the first user group based on a first collaborative media consumption session identifier associated with the collaborative media consumption session.
Example 16. The method of any of examples 13 to 15, further comprising: disabling a control permission of a user in the first user group.
Example 17. The method of any of examples 13 to 16, further comprising: determining a collaborative media consumption session identifier associated with the collaborative media consumption session; determining the first number of users in the first user group based on the collaborative media consumption session identifier; and setting the first set of control permissions based on the first number of users.
Example 18. The method of any of examples 13 to 17, further comprising: authenticating a second group of users to join the collaborative media consumption session; determining a second set of control permissions for the second user group, wherein the second set of control permissions is based on a second number of users in the second user group; and communicating the second set of control permissions to the second user group.
Example 19. The method of any of examples 13 to 18, further comprising: detecting, during the collaborative media consumption session, a change in a combination of the first number of users in the first user group and the second number of users in the second user group, updating at least one control permission associated with (i) the first user group, (ii) the second user group, or (iii) both the first user group and the second user group, thereby creating at least one updated control permission, and sending at least one updated control permission to (i) the first user group, (ii) the second user group, or (iii) both the first user group and the second user group, correspondingly.
Example 20. A non-transitory computer-readable medium having stored thereon one or more sequences of instructions for causing one or more processors to perform: authenticating a first group of users to join a collaborative media consumption session; determining a first set of control permissions for the first user group, wherein the first set of control permissions is based on a first number of users in the first user group; and communicating the first set of control permissions to the first user group.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above-described example embodiments but should be defined only in accordance with the following claims and their equivalents.

In addition, it should be understood that the figures are presented for example purposes only. The architecture of the example embodiments presented herein is sufficiently flexible and configurable, such that it may be utilized (and navigated) in ways other than that shown in the accompanying figures.

Further, the purpose of the foregoing Abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that the procedures recited in the claims need not be performed in the order presented.

## Claims

1. A system for device control permission coordinating in a collaborative media consumption session, comprising:
a permissions coordinator configured to:
authenticate a first group of users to join a collaborative media consumption session,
determine a first set of control permissions for the first user group, wherein the first set of control permissions is based on a first number of users in the first user group, and
communicate the first set of control permissions to the first user group.

2. The system of claim 1, wherein the first set of control permissions includes one or more control permissions corresponding to a hardware function associated with an audio output device configured to playback media content associated with the collaborative media consumption session.

3. The system of claim 2, wherein the one or more control permissions include any one or a combination of:
a volume control providing a permission to adjust the volume level of the audio output device,
a mute-unmute control providing a permission to mute or unmute an audio output of the audio output device,
an equalizer setting control providing a permission to modify one or more audio equalizer settings of the audio output device including any one or a combination of bass and treble,
an audio source selection control providing a permission to choose a source of audio input for the audio output device,
an audio effects control providing a permission to apply an audio effect to the media content,
an audio mode control providing a permission to switch between two or more different audio modes of the audio output device, and
a balance-fade control providing a permission to adjust a balance between left and right speakers of the audio output device, or a fade between front and rear speakers of the playback device in a multi-speaker configuration.

4. The system of any preceding claim, further comprising:
a permissions data store in communication with the permissions coordinator and configured to store a correlation between one or more control permissions and one or more user groups associated with the collaborative media consumption session; and
wherein said permissions coordinator further configured to:
cause the collaborative media consumption session to be established based on a collaborative media consumption session establishment request from a host user, the host user being a member of the first group, and
store in the permissions data store a first group control permission correlation between a first collaborative media consumption session identifier associated with the collaborative media consumption session, the first user group, and the first set of control permissions.

5. The system of any preceding claim, further comprising:
a permissions data store in communication with the permissions coordinator and configured to store a correlation between one or more control permissions and one or more user groups associated with the collaborative media consumption session; and
the permissions coordinator further configured to retrieve from the control permissions data store the first set of control permissions for the first user group based on a first collaborative media consumption session identifier associated with the collaborative media consumption session.

6. The system of any preceding claim, wherein the permissions coordinator is further configured to:
determine a collaborative media consumption session identifier associated with the collaborative media consumption session,
determine the first number of users in the first user group based on the collaborative media consumption session identifier, and
set the first set of control permissions based on the first number of users.

7. The system of any preceding claim, wherein the permissions coordinator is further configured to:
authenticate a second group of users to join the collaborative media consumption session,
determine a second set of control permissions for the second user group, wherein the second set of control permissions is based on a second number of users in the second user group, and
communicate the second set of control permissions to the second user group.

8. The system of any preceding claim, wherein the permissions coordinator further configured to:
detect, during the collaborative media consumption session, a change in a combination of the first number of users in the first user group and the second number of users in the second user group,
update at least one control permission associated with (i) the first user group, (ii) the second user group, or (iii) both the first user group and the second user group, thereby creating at least one updated control permission, and
send at least one updated control permission to (i) the first user group, (ii) the second user group, or (iii) both the first user group and the second user group, correspondingly.

9. The system of any preceding claim, wherein:
the collaborative media consumption session is associated with a collaborative media consumption session identifier, and
the collaborative media consumption session identifier includes a playlist identifier corresponding to a playlist of media content items, and/or the collaborative media consumption session identifier is represented by at least one or more of a scannable visual code, an audio signal with embedded acoustic fingerprint or Uniform Resource Locator (URL) or Uniform Resource Identifier (URI), a Bluetooth signal or an ultra wide band signal.

10. A method for device control permission coordinating in a collaborative media consumption session, comprising:
authenticating a first group of users to join a collaborative media consumption session;
determining a first set of control permissions for the first user group, wherein the first set of control permissions is based on a first number of users in the first user group; and
communicating the first set of control permissions to the first user group.

11. The method of claim 10, further comprising:
storing a correlation between one or more control permissions and one or more user groups associated with the collaborative media consumption session;
the method further comprising:
causing the collaborative media consumption session to be established based on a collaborative media consumption session establishment request from a host user, the host user being a member of the first group and storing a first group control permission correlation between a first collaborative media consumption session identifier associated with the collaborative media consumption session, the first user group, and the first set of control permissions; and/or
retrieving from a data store the first set of control permissions for the first user group based on a first collaborative media consumption session identifier associated with the collaborative media consumption session.

12. The method of claim 10 or 11, further comprising:
determining a collaborative media consumption session identifier associated with the collaborative media consumption session;
determining the first number of users in the first user group based on the collaborative media consumption session identifier; and
setting the first set of control permissions based on the first number of users.

13. The method of any of claims 10 to 12, further comprising:
authenticating a second group of users to join the collaborative media consumption session;
determining a second set of control permissions for the second user group, wherein the second set of control permissions is based on a second number of users in the second user group; and
communicating the second set of control permissions to the second user group.

14. The method of any of claims 10 to 13, further comprising:
detecting, during the collaborative media consumption session, a change in a combination of the first number of users in the first user group and the second number of users in the second user group,
updating at least one control permission associated with (i) the first user group, (ii) the second user group, or (iii) both the first user group and the second user group, thereby creating at least one updated control permission, and
sending at least one updated control permission to (i) the first user group, (ii) the second user group, or (iii) both the first user group and the second user group, correspondingly.

15. A non-transitory computer-readable medium having stored thereon one or more sequences of instructions for causing one or more processors to perform:
authenticating a first group of users to join a collaborative media consumption session;
determining a first set of control permissions for the first user group, wherein the first set of control permissions is based on a first number of users in the first user group; and
communicating the first set of control permissions to the first user group.
